# EUROPEAN PATENT APPLICATION

(11) **EP 4 160 511 A1**
(43) Date of publication of application: **05.04.2023**
(21) Application number: 22197083.3
(22) Date of filing: 22.09.2022
(51) Int. Cl.: G06Q 30/0601, G06N 3/00

(54) **SIMILARITY BASED ON ARTIFICIAL INTELLIGENCE IN E-COMMERCE MARKETPLACE**

(30) Priority: 30.09.2021 US 202163250695 P; 28.01.2022 US 202217587698
(71) Applicant: eBay, Inc., San Jose, CA 95125 (US)
(72) Inventor: KOPRU, Selcuk, San Jose, 95125 (US); SHAHANE, Santosh, San Jose, 95125 (US); PETRUSHKOV, Pavel, San Jose, 95125 (US); DAHLMANN, Friedrich Leonard, San Jose, 95125 (US); KOZIELSKI, Michael Damian, San Jose, 95125 (US)
(74) Representative: Murgitroyd & Company

(57) **Abstract**

Systems and methods provide determining listings of items based on similarities at least among items and queries in an online shopping system. In particular, the systems and methods determine similarities among items, users, product, messages, reviews, and queries, based on a combination of a machine learning model and similarity index data. The machine learning model (e.g., a Transformer model and a neural network model) generates embedded vector representation of items, queries, and other data in the online shopping systems. The machine learning model may be pre-trained based at least on data associated with items in the online shopping system, and fine-tuned based on a variety of mappings of similarities: item-to-item, user-to-item, query-to-item, and the like. The similarity index data include k-Nearest Neighbor index data for determining items within a range of similarity based on a receive query.

## Description

### BACKGROUND

Traditional e-commerce marketplace systems facilitate shopping experiences by generating a listing of goods based on a received query for such goods. The systems need to be scalable while maintaining high performance and improving a level of accuracy in identifying items sought by buyers. Some online shopping sites have grown so much that they have an interest in accommodating over a billion items available to over a hundred million active buyers. Further, some online shopping sites provide choices or recommendations of related goods to the buyers by displaying a listing of goods that are similar to one another. Some other online shopping sites provide personalized shopping experience based on profiles and a past shopping history of respective buyers.

Thus, developing a technology that better meets the needs of the buyers and the online shopping site to improve both robustness in scalability and performance while improving accuracy in providing listing of goods that meets buyers' expectations would be desirable. It is with respect to these and other general considerations that the aspects disclosed herein have been made. Also, although relatively specific problems may be discussed, it should be understood that the examples should not be limited to solving the specific problems identified in the background or elsewhere in this disclosure.

### SUMMARY

The present invention provides a system and computer-implemented method for generating a listing of items based on similarity as defined in the appended claims.

According to the present disclosure, the above and other issues are resolved by automatically generating similarity index data using a machine learning model and using the similarity index data to determine similarities among items, products, users, and queries. The disclosed technology generates a listing of items as a response to a query based on the similarities.

The present disclosure relates to automatically generating listing of goods at an online shopping site. In particular, the present disclosure uses artificial intelligence that is robust, scalable, and accurate in identifying goods, queries, buyers, sellers, messages among buyers and sellers, product reviews, user reviews, and the like, which are similar to one another. Artificial intelligence includes one or more trained models (e.g., a transformer model, a neural network model, and the like) for predicting similarities. For instance, the disclosed technology uses a transformer model that determines similarities among items, queries, and buyers.

Training of the transformer model includes two stages: pre-training and fine-tuning. A pre-trainer pre-trains the transformer model based on a combination of two types of training data. A first type of the training data includes sets of general vocabularies and definitions of words and texts as a general knowledge. A second type of the training data includes data associated with goods being sold at the online shopping site. The data associated with goods includes product names, product descriptions, product specifications, and the like. A fine tuner fine-tunes the pre-trained transformer model by various types of training data that encompass at least the following combinations of use cases in the online shopping site for depicting similarities in respective domains of advertising, searching, and cataloging: user-to-item, item-to-item, query-to-item, query-to-query, and item-to-product. In aspects, the term "item" refers to a listing of one or more products. In some aspects, the term "product" refers to an entry in a product catalog.

In particular, the disclosed technology includes generating and updating an index for k-Nearest Neighborhood (kNN) search for determining similarities among items, users, queries, and products. For example, the disclosed technology performs offline processing for learning representations of items and products listed in the online shopping site and generating kNN index. The disclosed technology further performs from online processing for processing kNN search based on received queries and updating the kNN index based on interactive data from the users and updates of the item listings.

The present disclosure relates to systems and methods for generating a listing of items based on similarity. The computer-implemented method comprises receiving a query; generating, based on the received query, embedded vector data using a model. The embedded vector data indicates vector representations of similarities among the received query and items. The model includes a trained model based on similarities at least in one or more relationships including: item-to-item, user-to-item, or query-to-item. The method further includes determining, based on a similarity index search using similarity index data and the embedded vector data, one or more items for listing; transmitting a listing of the one or more items; and updating, based on the determined one or more items for listing, the similarity index data. The method further comprises pre-training the model using at least data associated with items in an online shopping system. The model includes a Transformer model. The method further includes fine-tuning the model based on training data associated with similarities at least between one or more of: item-to-item, user-to-item, product-to-item, or query-to-item; and generating the embedded vector data.

The method further comprises generating, based on the embedded vector data, the similarity index data. The similarity index data includes a graph with a plurality of layers of nodes in hierarchy. The model includes a Siamese network, and the method further comprises retrieving a pair of input from the training data, the pair of input indicating ground truth examples of one or more of: item-to-item, user-to-item, product-to-item, or query-to-item; and training, based on the pair of input, the Siamese network, the Siamese network including a plurality of encoders, each encoder encoding one of the pair of input to generate embedding vector data. The similarity index data include a k-Nearest Neighbor index. The similarity index data include a Hierarchical Navigable Small World graph. The method further comprises generating, based on the determined one or more items for listing, the listing of the one or more items as an answer to the received query. The disclosed technology further relates to a computer-readable storage medium storing computer-executable instructions. The computer-executable instructions that when executed by a processor cause a system to execute the method as summarized above.

This Summary is provided to introduce a selection of concepts in a simplified form, which is further described below in the Detailed Description. This Summary is not intended to identify key features or essential features of the claimed subject matter, nor is it intended to be used to limit the scope of the claimed subject matter. Additional aspects, features, and/or advantages of examples will be set forth in part in the following description and, in part, will be apparent from the description, or may be learned by practice of the disclosure.

### BRIEF DESCRIPTIONS OF THE DRAWINGS

Non-limiting and non-exhaustive examples are described with reference to the following figures.
FIG. 1 illustrates an overview of an example system for generating a search result in accordance with aspects of the present disclosure.
FIG. 2 illustrates an overview of an example system for generating similarity index data in accordance with aspects of the present disclosure.
FIG. 3 illustrates an example of generating item listing based on a query in accordance with aspects of the present disclosure.
FIG. 4 illustrates an example of generating item listing based on a query in accordance with aspects of the present disclosure.
FIG. 5 illustrates an example of a method for generating similarity index data in accordance with aspects of the present disclosure.
FIG. 6 illustrates an example of a method for generating item listing based on similarity in accordance with aspects of the present disclosure.
FIG. 7 is a block diagram illustrating example physical components of a computing device with which aspects of the disclosure may be practiced.

### DETAILED DESCRIPTION

Various aspects of the disclosure are described more fully below with reference to the accompanying drawings, which from a part hereof, and which show specific example aspects. However, different aspects of the disclosure may be implemented in many different ways and should not be construed as limited to the aspects set forth herein; rather, these aspects are provided so that this disclosure will be thorough and complete and will fully convey the scope of the aspects to those skilled in the art. Aspects may be practiced as methods, systems, or devices. Accordingly, aspects may take the form of a hardware implementation, an entirely software implementation or an implementation combining software and hardware aspects. The following detailed description is, therefore, not to be taken in a limiting sense.

As online shopping gains popularity among sellers and buyers, there have been increasing needs for an online shopping system that is scalable to accommodate more products, sellers, and buyers in an online marketplace. Issues may arise as the buyers also seek better shopping experience by expecting product and item search results with accuracy based on queries and the buyer's interactive history with the online shopping system.

The present disclosure addresses the issues by use of artificial intelligence in indexing data associated with products, items, and buyers in a manner that is scalable while improving accuracy in search results. In particular, the disclosed technology determines similarities among products, items, queries, and users (i.e., buyers and sellers) by first generating embedded vector representations of data associated with products, items, and users. For example, a transformer model may be used. Training the transformer model may include pre-training a model based on a combination of general textual training data with general terms and data associated with products, items, and the users in the online shopping system. The training may further include fine-tuning. The fine-tuning may be based on types of use cases associated with use of the model to determine similarities: item-to-item, user-to-item, item-to-product, query-to-item, and the like. For instance, a Siamese neural network setting may be used to train the transformer model that generates the vector embeddings.

The disclosed technology generates a similarity index based on the embedded vector representation of data. In particular, a k-Nearest Neighborhood (kNN) index generator generates a data structure that represents kNN indices. For example, the disclosed technology may store the kNN index data in a hierarchical graph with a plurality of layers of nodes (e.g., Hierarchical Navigable Small World (HNSW) graph). The disclosed technology does not limit itself to use HNSW graph. Other examples may include k-selection methods in a nearest neighborhood in scalable settings and in compressed vector settings. The kNN index data may be updated as the system receives queries, generates new listing of items by a kNN search, receives further interactions with the buyers. Needs may arise for updating the similarity index data.

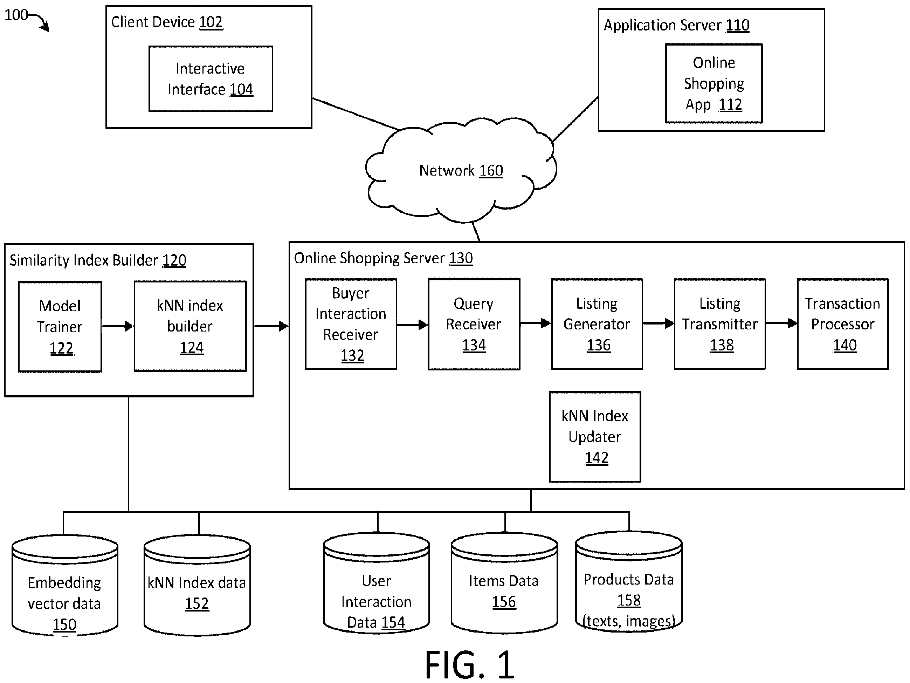

FIG. 1 illustrates an overview of an example system 100 for automatically generating a listing of items to the buyer based on similarities. System 100 represents a system for generating listings of items based on a query by determining similarity among the query and items. System 100 includes a client device 102, an application server 110, a similarity index builder 120, an online shopping server 130, and a network 160. The client device 102 communicates with the application server 110, which includes one or more sets of instructions to execute as applications on the client device 102. The application server 110 includes an online shopping app 112 (i.e., an application). The one or more sets of instructions in the application server 110 may provide an interactive user interface through an interactive interface 104.

The similarity index builder 120 builds kNN index data. The similarity index builder 120 includes a model trainer 122 and a kNN index builder 124. In aspects, the model trainer 122 trains a Transformer model by a combination of pre-training and fine-tuning. In aspects, the pre-training uses a combination of general topical texts with descriptions / definitions (e.g., wiki data from the Internet) and data associated with items, products, and users of the online shopping system (e.g., user interaction data 154, items data 156, and products data 158). In aspects, the pre-training may take place while the online shopping server 130 is "offline" (i.e., an online shopping site hosted by the online shopping server 130 is closed to the users).

The fine-tuning may depend on use cases of determining similarities. For example, distinct pre-training may be performed based on similarities associated with item-to-item, item-to-product, user-to-product, query-to-item, and the like. In some aspects, fine-tuning that includes items and products in the online shopping system may be unsupervised. The model trainer 122 generates a set of embedding vector data 150 associated with items, products, queries, and user interactions with the online shopping system. In aspects, the fine-tuning may take place while the online shopping server 130 is "offline."

The kNN index builder 124 generates a data structure to store the kNN index data 152 based on the embedded vector data. A use of the kNN index data enables the online shopping system to determine items that are similar to a given item or query. In aspects, the kNN index builder 124 may generate an HNSW graph as a data structure to store the kNN index.

The online shopping server 130 includes a buyer interaction receiver 132, a query receiver 134, a listing generator 136, a listing transmitter 138, a transaction processor 140, and kNN index updater 142.

The buyer interaction receiver 132 receives operations made by the buyer using the client device 102 for searching products and items using the interactive interface 104 with the online shopping app 112. In aspects, the buyer interaction receiver 132 stores the received operations in the user interaction data 154. The user interaction data 154 may represent a least a part of online shopping data.

The query receiver 134 receives a query from the buyer using the client device 102 via the network 160. In aspects, the query receiver transforms the query (e.g., in a text form) into embedding vector data 150 by using the trained model. In aspects, the embedding vector data 150 describes similarity distance data in multi-dimensional space.

The listing generator 136 generates a listing of items (e.g., a listing of products) as a search result of the received query. In aspects, the listing generator 136 determines a set of items with similarity within a k-nearest neighborhood in the kNN index data 152. The listing generator 136 may retrieve item data from the items data 156 and product data from the products data 158. The kNN index data 152 may be based on the HNSW graph. The listing generator 136 generates the listing of items from the set of items.

The listing transmitter 138 transmits the listing to the client device 102 over the network 160. The interactive interface 104 may display the listing of items as a search result of the query to the users on the client device 102.

The transaction processor 140 may process a transaction of an item when the buyer selects an item (e.g., a product) from the listing of items for acquisition. In aspects, the transaction of the item includes processing a financial transaction and logistics (e.g., shipping) associated with the acquisition of the item by the buyer.

The kNN index updater 142 updates the kNN index data 152 when a need arises to modify the similarities among items, products, queries, and users as the buyer operates on the listing of items. For example, the kNN index updater 142 may update an index value associated with the item when the buyer selects the item on the list of items for acquisition, signifying that the selected item has a preference that is higher than other items on the list.

As will be appreciated, the various methods, devices, applications, features, etc., described with respect to FIG. 1 are not intended to limit the system 100 to being performed by the particular applications and features described. Accordingly, additional controller configurations may be used to practice the methods and systems herein and/or features and applications described may be excluded without departing from the methods and systems disclosed herein.

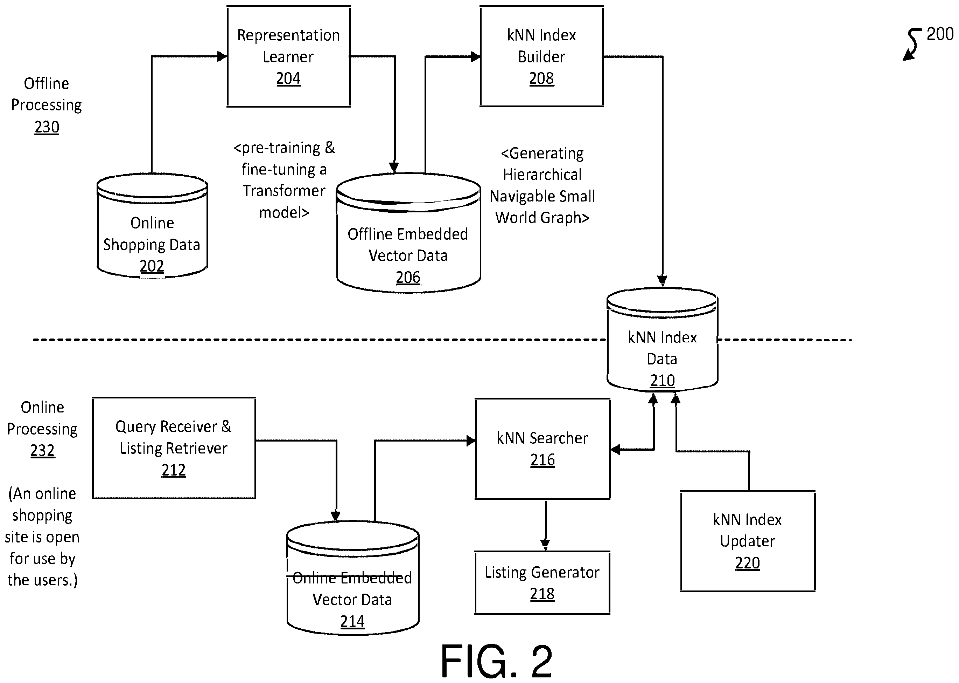

FIG. 2 illustrates an example system of generating kNN index data in accordance with aspects of the present disclosure. In FIG. 2, the system 200 includes processing that takes place while the system is offline and other processing that takes place while the system is online is the buyer interacts with the system.

The system 200 includes offline processing 230 and online processing 232. In aspects, the offline processing 230 may take place when an online shopping site (e.g., the online shopping server 130 as shown in FIG. 1) is not available to the users for product searches and for transactions). The online processing 232 may take place when the online shopping site is open for use by the users for product search and acquisition.

In aspects, the offline processing 230 includes use of an online shopping data 202 (e.g., the user interaction data 154 as shown in FIG. 1), a representation learner 204, an offline embedded vector data 206, a kNN index builder 208, and kNN index data 210.

The online shopping data 202 includes transactional records of items in the online shopping system 200. For example, the transactional records may include dates and times of sales transactions of an item, a quantity, and information associated with a buyer and a seller of the item. The representation learner 204 pre-trains and fine-tunes a Transformer model. The offline embedded vector data 206 represents a set of embedded vector data based on the trained and fine-tuned Transformer model. The kNN index builder 208 builds kNN index data 210 by generating a hierarchical navigable small world graph based on the offline embedded vector data 206.

In aspects, the online processing 232 includes use of a query receiver & listing retriever 212, an online-embedded vector data 214, a kNN searcher 216, a listing generator 218, and a kNN index updater 220. In aspects, the query receiver & listing retriever 212 receives a query for searching for products from the buyer using a client device (e.g., the client device 102 as shown in FIG. 1).

The query receiver & listing retriever 212 generates embedded vectors using the trained Transformer model and stores online embedded vector data 214. The kNN searcher 216 uses the combination of the online embedded vector data 214 associated with the received query and kNNs in the kNN index data 210 and generates a listing of items. The listing generator generates a graphical representation of the listing of items and transmits the listing to the client device for display to the user. The kNN index updater 220 updates the kNN index data 210 based on the generated listing of items and a selection of items and/or products in the listing of items.

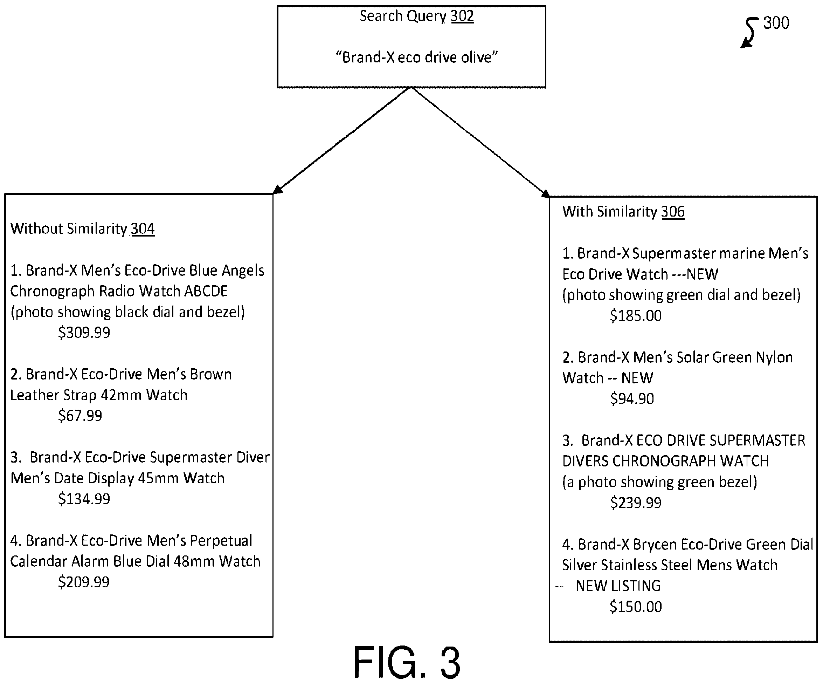

FIG. 3 illustrates an example of a received query and listings of items as search results according to aspects of the present disclosure. The diagram 300 includes a search 302 and a result without similarity 304 and a result with similarity 306. In aspects, the latter list, the result with similarity 306 describes a result based on the similarity index according to the present disclosure. The result without similarity 304 describes a listing based on a traditional system with omitting words and rewriting a query while processing the received query.

In aspects, the listing without similarity 304 includes: 1. Brand-X Men's Eco-Drive Blue Angels Chronograph Radio Watch ABCDE (photo showing black dial and bezel) $309.99; 2. Brand-X Eco-Drive Men's Brown Leather Strap 42mm Watch $67.99; 3. Brand-X Eco-Drive Supermaster Diver Men's Date Display 45mm Watch $134.99; and 4. Brand-X Eco-Drive Men's Perpetual Calendar Alarm Blue Dial 48mm Watch $209.99.

In aspects, the listing with similarity 306 includes: 1. Brand-X Supermaster marine Men's Eco Drive Watch ---NEW (photo showing green dial and bezel) $185.00; 2. Brand-X Men's Solar Green Nylon Watch - NEW $94.90; 3. Brand-X ECO DRIVE SUPERMASTER DIVERS CHRONOGRAPH WATCH (a photo showing green bezel) $239.99; and 4. Brand-X Brycen Eco-Drive Green Dial Silver Stainless Steel Mens Watch -- NEW LISTING $150.00.

In aspects, the listing with similarity 306 captures a listing of items that includes more watches with Brand-X and in a color that is olive or similar to olive as well as "brand-X" and "eco drive." The difference in the listing may be based on the learnt data that is trained to determine similarities associated with items, products, queries, and buyers during the pre-training of the Transformer model. The difference may further may be based on the kNN index data that are generated from the trained Transformer model.

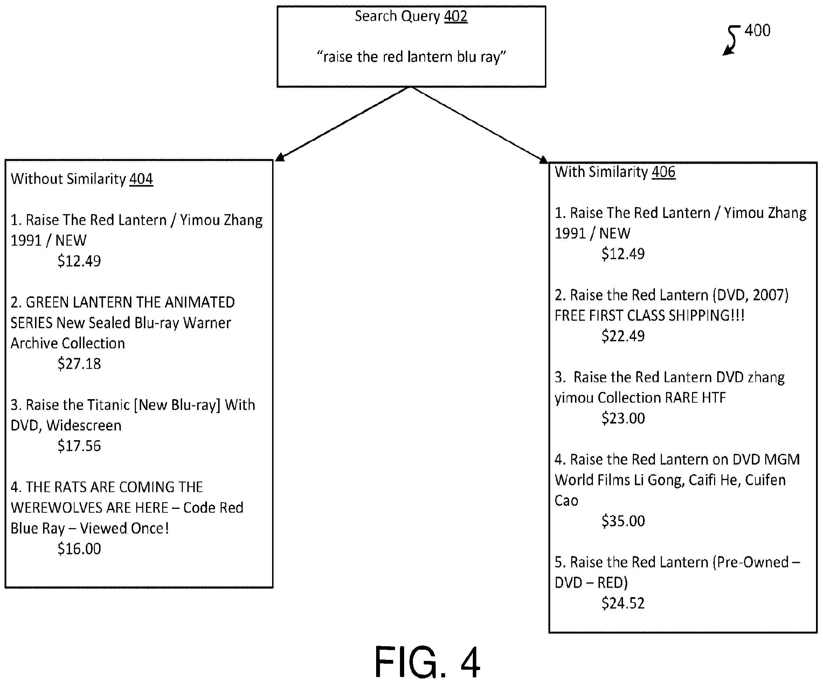

FIG. 4 illustrates an example of a received query and listings of items as search results according to aspects of the present disclosure. The diagram 400 includes a search 402 and a result without similarity 404 and a result with similarity 406. In aspects, the latter list, the result with similarity 406 describes a result based on the similarity index according to the present disclosure. The result without similarity 404 describes a listing based on a traditional system with omitting words and rewriting a query while processing the received query.

In aspects, the listing without similarity 404 includes: 1. Raise The Red Lantern / Yimou Zhang 1991 / NEW $12.49; 2. GREEN LANTERN THE ANIMATED SERIES New Sealed Blu-ray Warner Archive Collection $27.18; 3. Raise the Titanic [New Blu-ray] With DVD, Widescreen $17.56; and 4. THE RATS ARE COMING THE WEREWOLVES ARE HERE - Code Red Blue Ray - Viewed Once! $16.00.

In aspects, the listing with similarity 406 includes: 1. Raise The Red Lantern / Yimou Zhang 1991 / NEW $12.49; 2. Raise the Red Lantern (DVD, 2007) FREE FIRST CLASS SHIPPING!!! $22.49; 3. Raise the Red Lantern DVD zhang yimou Collection RARE HTF $23.00; 4. Raise the Red Lantern on DVD MGM World Films Li Gong, Caifi He, Cuifen Cao $35.00; and 5. Raise the Red Lantern (Pre-Owned - DVD - RED) $24.52.

In aspects, the listing with similarity 406 captures a listing of items that includes more movies with the title while weighing less on "blu ray." The difference in the listing may be based on the learnt data associated with items, products, queries, and buyers during the pre-training of the Transformer model and the kNN index data that are based on the trained Transformer model.

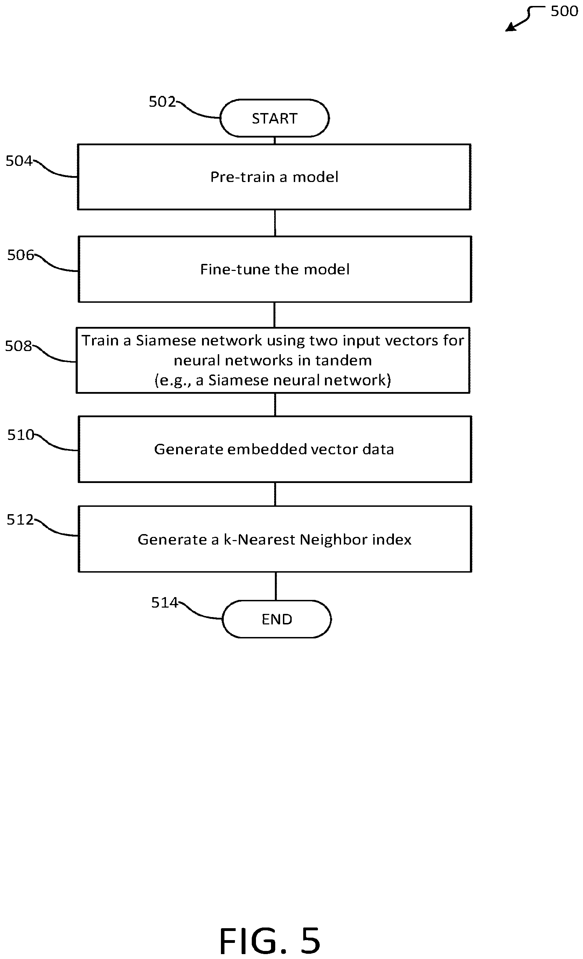

FIG. 5 is an example of a method for generating kNN index data in accordance with aspects of the present disclosure. A general order of the operations for the method 500 is shown in FIG. 5. Generally, the method 500 begins with start operation 502 and ends with end operation 514. The method 500 may include more or fewer steps or may arrange the order of the steps differently than those shown in FIG. 5. The method 500 can be executed as a set of computer-executable instructions executed by a computer system and encoded or stored on a computer readable medium. Further, the method 500 can be performed by gates or circuits associated with a processor, an ASIC, an FPGA, a SOC or other hardware device. Hereinafter, the method 500 shall be explained with reference to the systems, components, devices, modules, software, data structures, data characteristic representations, signaling diagrams, methods, etc., described in conjunction with FIGS. 1, 2, 3, 4, 6 and 7.

Following start operation 502, the method 500 begins with pre-train operation 504, with pre-trains the transformer model. The pre-train operation 504 pre-trains a Transformer model based on a combination of two distinct types of training data. A first type of the training data includes sets of general vocabularies and definitions of words and texts as a general knowledge. A second type of the training data includes data associated with goods being sold at the online shopping site.

Fine-tune operation 506 fine-tunes the pre-trained model for generating embedded vector data for use in searching for items and products in the online shopping system. In aspects, the fine-tune operation 506 uses training data that encompass at least the following combinations of use cases in the online shopping site for depicting similarities in respective domains of advertising, searching, and cataloging: user-to-item, item-to-item, query-to-item, query-to-query, and item-to-product.

Train operation 508 trains a Siamese neural network. In aspects, the train operation 508 includes training a Siamese neural network, which uses the same weight for processing two input vectors in tandem and generates an output vector. For example, the two input vectors may represent a true example pair of an item and another item, an item and an image associated with the item, a user (i.e., a history of user interaction in searching and selecting items as a past event) and an item, a query and an item, and the like.

Generate operation 510 generates embedded vector data (e.g., the offline embedded vector data 206 as shown in FIG. 2). In aspects, encoders associated with the Siamese neural network generate a pair of embedding vectors for respective parts of pairs that represent exemplary similarity (e.g., item-to-item, item-to-image, item-to-item, query-to-item, query-to-query, item-to-product, and the like). The generate operation 510 merges the pair of embedding vectors into embedded vectors by various processing including but not limited to mapping into a multimodal space, enriching embeddings by training for predicting randomly masked namevalue pairs.

Generate operation 512 generates k-Nearest Neighbor index data (i.e., kNN index data). In aspects, the generate operation 512 may use the HNSW as a data structure to store kNN index data. In aspects, the method 500 may be executed while the online shopping system is "offline" and not available for the users for searching and for acquisition of products. The generated kNN index data may be used by a kNN searcher (e.g., the kNN searcher 216 as shown in FIG. 2) while processing a received query to generate a listing of items while the online shopping system is "online" (i.e., the online shopping system is available to the users for searching for and acquiring products). The method 500 ends with the end operation 514.

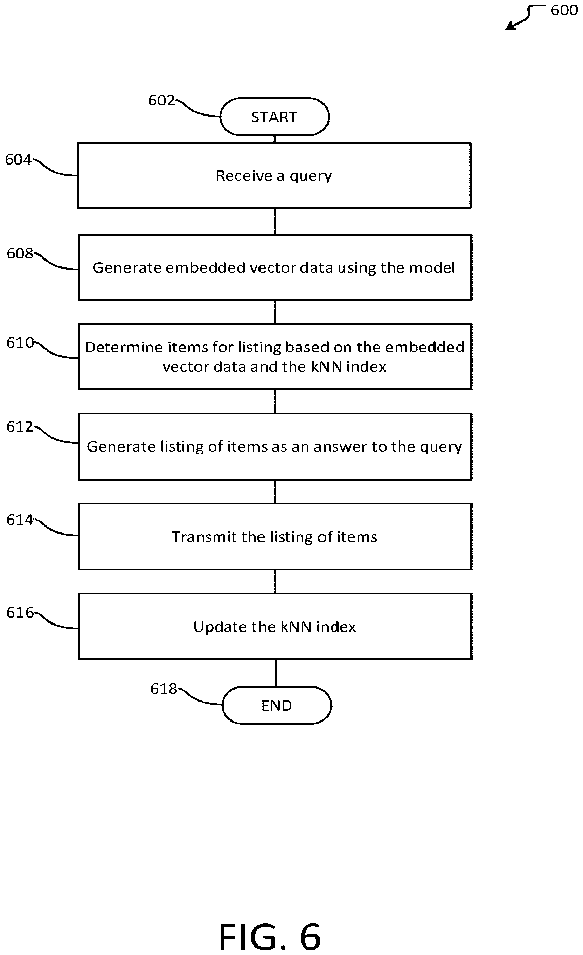

FIG. 6 is an example of a method for listing of items and updating the kNN index data in accordance with aspects of the present disclosure. A general order of the operations for the method 600 is shown in FIG. 6. Generally, the method 600 begins with start operation 602 and ends with end operation 618. The method 600 may include more or fewer steps or may arrange the order of the steps differently than those shown in FIG. 6. The method 600 can be executed as a set of computer-executable instructions executed by a computer system and encoded or stored on a computer readable medium. Further, the method 600 can be performed by gates or circuits associated with a processor, an ASIC, an FPGA, a SOC or other hardware device. Hereinafter, the method 600 shall be explained with reference to the systems, components, devices, modules, software, data structures, data characteristic representations, signaling diagrams, methods, etc., described in conjunction with FIGS. 1, 2, 3, 4, 5, and 7.

Following start operation 602, the method 600 begins with receive operation 604, which receives a query for searching items. In aspects, the receive operation 604 receives a query from a buyer using a client device (e.g., the client device 102 as shown in FIG. 1) and access the online shopping system. The query may include a command and one or more parameters needed to search for items and products.

Generate operation 608 generates embedded vector data associated with the received query. In aspects, the generate operation 608 uses the fine-tuned transformer model (e.g., query-to-item) for generating the embedded vector data. The embedded vector data includes a multidimensional vector including attributes and values, which in aggregate represent features sought during a search. For example, attributes may include items, products, users, image data, and the like.

Determiner operation 610 determines items for listing based on the embedded vector data and the kNN index data based on the embedded vector data. In aspects, the kNN index data may be an output generated by a kNN index builder (e.g., the kNN index builder 208 as shown in FIG. 2) while the online shopping system is "offline."

Generate operation 612 generates a listing of items as an answer to the query. In aspects, the listing of items includes one or more items that may be selected for further search and/or transaction (e.g., acquisition).

Transmit operation 614 transmits the listing of item to the buyer over a network (e.g., the network 160. In aspects, the client device 102 may receive the transmitted listing of items for display on the client device 102 through the interactive interface 104.

Update operation 616 updates the kNN index data as similarities among items, products, users, and queries may change over time. In aspects, the update operation 616 may update the kNN index data (e.g., the kNN index data 210 as shown in FIG. 2) in real-time while the online shopping system is "online." In some aspects, data for updating the kNN index data may be based on a result of a search by the kNN searcher (e.g., the kNN searcher 216 as shown in FIG. 2). In aspects, the update operation 616 updates similarity relationships among items, products, users, and images for improving accuracy and efficiency of subsequent searches by the kNN searcher. The method 600 ends with the end operation 618.

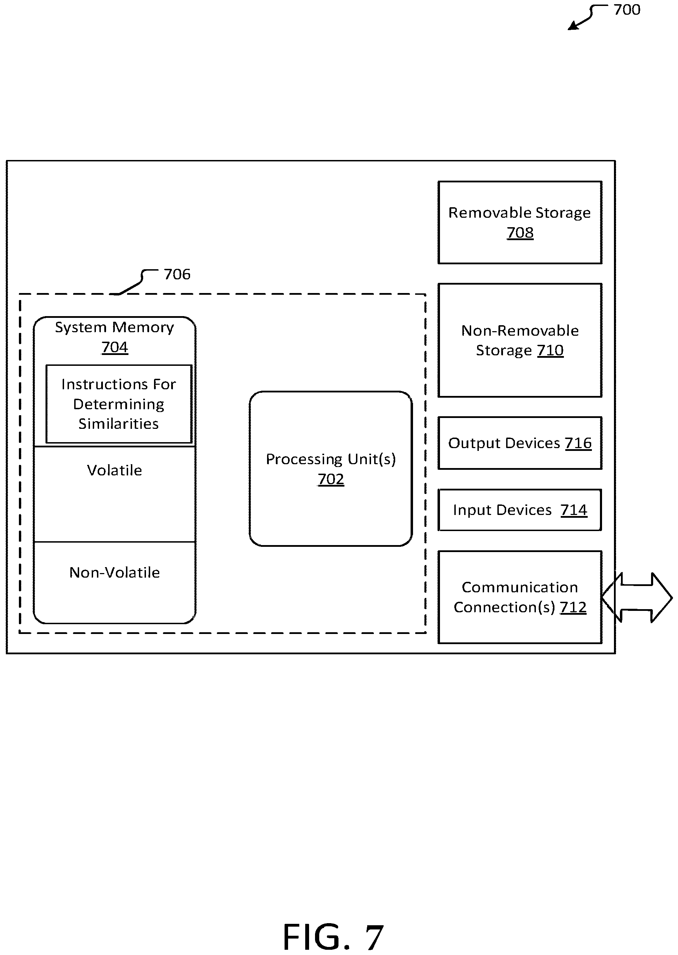

FIG. 7 illustrates a simplified block diagram of the device with which aspects of the present disclosure may be practiced in accordance with aspects of the present disclosure. One or more of the present embodiments may be implemented in an operating environment 700. This is only one example of a suitable operating environment and is not intended to suggest any limitation as to the scope of use or functionality. Other well-known computing systems, environments, and/or configurations that may be suitable for use include, but are not limited to, personal computers, server computers, hand-held or laptop devices, multiprocessor systems, microprocessor-based systems, programmable consumer electronics such as smartphones, network PCs, minicomputers, mainframe computers, distributed computing environments that include any of the above systems or devices, and the like.

In its most basic configuration, the operating environment 700 typically includes at least one processing unit 702 and memory 704. Depending on the exact configuration and type of computing device, memory 704 (instructions to determining similarities as described herein) may be volatile (such as RAM), non-volatile (such as ROM, flash memory, etc.), or some combination of the two. This most basic configuration is illustrated in FIG. 7 by dashed line 706. Further, the operating environment 700 may also include storage devices (removable, 708, and/or non-removable, 710) including, but not limited to, magnetic or optical disks or tape. Similarly, the operating environment 700 may also have input device(s) 714 such as keyboard, mouse, pen, voice input, on-board sensors, etc. and/or output device(s) 716 such as a display, speakers, printer, motors, etc. Also included in the environment may be one or more communication connections, 712, such as LAN, WAN, a near-field communications network, point to point, etc.

Operating environment 700 typically includes at least some form of computer readable media. Computer readable media can be any available media that can be accessed by at least one processing unit 702 or other devices comprising the operating environment. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other tangible, non-transitory medium which can be used to store the desired information. Computer storage media does not include communication media. Computer storage media does not include a carrier wave or other propagated or modulated data signal.

Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. A computer readable medium can comprise a computer storage medium or a transient medium such as a communication medium.

The operating environment 700 may be a single computer operating in a networked environment using logical connections to one or more remote computers. The remote computer may be a personal computer, a server, a router, a network PC, a peer device or other common network node, and typically includes many or all of the elements described above as well as others not so mentioned. The logical connections may include any method supported by available communications media. Such networking environments are commonplace in offices, enterprise-wide computer networks, intranets and the Internet.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, for example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, for example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

The present disclosure relates to systems and methods for generating a listing of items based on similarity. The computer-implemented method comprises receiving a query; generating, based on the received query, embedded vector data using a model, wherein the embedded vector data indicates vector representations of similarities among the received query and items, and wherein the model includes a trained model based on similarities at least in one or more relationships including: item-to-item, user-to-item, or query-to-item; determining, based on a similarity index search using similarity index data and the embedded vector data, one or more items for listing; transmitting a listing of the one or more items; and updating, based on the determined one or more items for listing, the similarity index data. The method further comprises pre-training the model using at least data associated with items in an online shopping system, wherein the model includes a Transformer model; fine-tuning the model based on training data associated with similarities at least between one or more of: item-to-item, user-to-item, product-to-item, or query-to-item; and generating the embedded vector data. The method further comprises generating, based on the embedded vector data, the similarity index data, wherein the similarity index data includes a graph with a plurality of layers of nodes in hierarchy. The model includes a Siamese network, and the method further comprises retrieving a pair of input from the training data, the pair of input indicating ground truth examples of one or more of: item-to-item, user-to-item, product-to-item, or query-to-item; and training, based on the pair of input, the Siamese network, the Siamese network including a plurality of encoders, each encoder encoding one of the pair of input to generate embedding vector data. The similarity index data include a k-Nearest Neighbor index. The similarity index data include a Hierarchical Navigable Small World graph. The method further comprises generating, based on the determined one or more items for listing, the listing of the one or more items as an answer to the received query.

Another aspect of the technology relates to a system for generating a listing of items based on similarity. The system comprises a processor; and a memory storing computer-executable instructions that when executed cause the system to execute a method comprising receiving a query; generating, based on the received query, embedded vector data using a model, wherein the embedded vector data indicates vector representations of similarities among the received query and items, and wherein the model includes a trained model based on similarities at least in one or more relationships including: item-to-item, user-to-item, or query-to-item; determining, based on a similarity index search using similarity index data and the embedded vector data, one or more items for listing; transmitting a listing of the one or more items; and updating, based on the determined one or more items for listing, the similarity index data. The computer-executable instructions when executed further causing the system to execute a method comprising pre-training the model using at least data associated with items in an online shopping system, wherein the model includes a Transformer model; fine-tuning the model based on training data associated with similarities at least between one or more of: item-to-item, user-to-item, product-to-item, or query-to-item; and generating the embedded vector data. The computer-executable instructions when executed further causing the system to execute a method comprising generating, based on the embedded vector data, the similarity index data, wherein the similarity index data includes a graph with a plurality of layers of nodes in hierarchy. The model includes a Siamese network, and the computer-executable instructions when executed further causing the system to execute a method further comprising retrieving a pair of input from the training data, the pair of input indicating ground truth examples of one or more of: item-to-item, user-to-item, product-to-item, or query-to-item; and training, based on the pair of input, the Siamese network, the Siamese network including a plurality of encoders, each encoder encoding one of the pair of input to generate embedding vector data. The similarity index data include a k-Nearest Neighbor index. The similarity index data include a Hierarchical Navigable Small World graph. The computer-executable instructions when executed further causing the system to execute a method comprising generating, based on the determined one or more items for listing, the listing of the one or more items as an answer to the received query.

In still further aspects, the technology relates to a computer-readable medium carrying computer-executable instructions. The computer-executable instructions that when executed by a processor cause a system to execute a method comprising receiving a query; generating, based on the received query, embedded vector data using a model, wherein the embedded vector data indicates vector representations of similarities among the received query and items, and wherein the model includes a trained model based on similarities at least in one or more relationships including: item-to-item, user-to-item, or query-to-item; determining, based on a similarity index search using similarity index data and the embedded vector data, one or more items for listing; transmitting a listing of the one or more items; and updating, based on the determined one or more items for listing, the similarity index data. The computer-executable instructions when executed further cause the system to execute a method comprising pre-training the model using at least data associated with items in an online shopping system, wherein the model includes a Transformer model; fine-tuning the model based on training data associated with similarities at least between one or more of: item-to-item, user-to-item, product-to-item, or query-to-item; and generating the embedded vector data. The computer-executable instructions when executed further cause the system to execute a method comprising generating, based on the embedded vector data, the similarity index data, wherein the similarity index data includes a graph with a plurality of layers of nodes in hierarchy. The model includes a Siamese network, and the computer-executable instructions when executed further cause the system to execute a method comprising retrieving a pair of input from the training data, the pair of input indicating ground truth examples of one or more of: item-to-item, user-to-item, product-to-item, or query-to-item; and training, based on the pair of input, the Siamese network, the Siamese network including a plurality of encoders, each encoder encoding one of the pair of input to generate embedding vector data. The similarity index data include a k-Nearest Neighbor index, and wherein the k-Nearest Neighbor index is based on a Hierarchical Navigable Small World graph. The computer-executable instructions when executed further cause the system to execute a method comprising generating, based on the determined one or more items for listing, the listing of the one or more items as an answer to the received query.

Any of the one or more above aspects in combination with any other of the one or more aspect. Any of the one or more aspects as described herein.

## Claims

1. A computer-implemented method for generating a listing of items based on similarity, the method comprising:
receiving a query;
generating, based on the received query, embedded vector data using a model, wherein the embedded vector data indicates vector representations of similarities among the received query and items, and wherein the model includes a trained model based on similarities at least in one or more relationships including: item-to-item, user-to-item, or query-to-item;
determining, based on a similarity index search using similarity index data and the embedded vector data, one or more items for listing;
transmitting a listing of the one or more items; and
updating, based on the determined one or more items for listing, the similarity index data.

2. The computer-implemented method according to claim 1, the method further comprising:
pre-training the model using at least data associated with items in an online shopping system, wherein the model includes a Transformer model;
fine-tuning the model based on training data associated with similarities at least between one or more of: item-to-item, user-to-item, product-to-item, or query-to-item; and
generating the embedded vector data.

3. The computer-implemented method according to claim 1 or claim 2, the method further comprising:
generating, based on the embedded vector data, the similarity index data, wherein the similarity index data includes a graph with a plurality of layers of nodes in hierarchy.

4. The computer-implemented method according to claim 2, wherein the model includes a Siamese network, and the method further comprising:
retrieving a pair of input from the training data, the pair of input indicating ground truth examples of one or more of: item-to-item, user-to-item, product-to-item, or query-to-item; and
training, based on the pair of input, the Siamese network, the Siamese network including a plurality of encoders, each encoder encoding one of the pair of input to generate embedding vector data.

5. The computer-implemented method according to any one of claims 1 to 4,
wherein the similarity index data include a k-Nearest Neighbor index.

6. The computer-implemented method according to any one of claims 1 to 4,
wherein the similarity index data include a Hierarchical Navigable Small World graph.

7. The computer-implemented method according to any one of claims 1 to 6, the method further comprising:
generating, based on the determined one or more items for listing, the listing of the one or more items as an answer to the received query.

8. A system generating a listing of items based on similarity, the system comprising:
a processor; and
a memory storing computer-executable instructions that when executed cause the system to execute the method of any one of claims 1 to 7.

9. A computer-readable medium carrying computer-executable instructions that when executed by a processor cause a system to execute the method of any one of claims 1 to 7.
